# EUROPÄISCHE PATENTANMELDUNG

(11) **EP 2 659 990 A2**
(43) Veröffentlichungstag der Anmeldung: **06.11.2013**
(21) Anmeldenummer: 13001298.2
(22) Anmeldetag: 14.03.2013
(51) Int. Cl.: B08B 9/02, F16L 55/40, G01N 21/954

(54) **Vorrichtung zur Inspektion und/oder Sanierung von Rohrleitungen**

(30) Priorität: 04.05.2012 DE 102012009046
(71) Anmelder: Prokasro Mechatronik GmbH, 76187 Karlsruhe (DE)
(72) Erfinder: Zipperlen, Ulrich, 76297 Stutensee-Blankenloch (DE)
(74) Vertreter: Lenz, Steffen

(57) **Zusammenfassung**

Es wird eine Vorrichtung zur Inspektion und/oder Sanierung von Rohrleitungen vorgeschlagen, welche wenigstens eine Kamera und/oder wenigstens ein Werkzeug 2, das an einem durch die Rohrleitung hindurch führbaren Träger 1 angeordnet ist, umfasst. Um der Vorrichtung eine einwandfreie Durchfahrbarkeit durch mit Krümmungen versehenen Rohrleitungen, wie beispielsweise solchen von Hausanschlüssen zu verleihen, sieht die Erfindung vor, dass ein Querschnitt des Trägers in einer ersten Ebene, welche die Längsmittelachse der Rohrleitung einschließt, eine im Wesentlichen geradlinige oder konkave Unterseite 10 aufweist, von deren äußeren Enden (10a, 10b) sich zumindest die endseitigen Abschnitte einer Oberseite 11 bogenförmig konvex nach oben und von dem jeweiligen äußeren Ende (10a, 10b) der Unterseite 10 in Richtung deren entgegengesetztem Ende (10b, 10a) fort erstrecken, wobei der Krümmungsradius oder die Krümmungsradien der sich bogenförmig konvex nach oben und von den jeweiligen äußeren Enden (10a, 10b) der Unterseite 10 fort erstreckenden, endseitigen Abschnitte (11a, 11b) der Oberseite 11 des ersten Querschnittes mehr als 50% des maximalen Abstandes (A) der Unterseite 10 von der Oberseite 11 beträgt bzw. betragen.

## Beschreibung

Die Erfindung betrifft eine Vorrichtung zur Inspektion und/oder Sanierung von Rohrleitungen, mit wenigstens einer Kamera und/oder mit wenigstens einem Werkzeug, welches an einem durch die Rohrleitung hindurch führbaren Träger angeordnet ist.

Derartige Vorrichtungen sind bekannt und finden insbesondere bei der Inspektion und/oder bei der Sanierung von Rohrleitungen verbreiteten Einsatz, wobei exemplarisch auf die DE 10 2009 017 829 B4 oder DE 203 18 292 U1 verwiesen sei. Hierzu wird der in der Regel mit einer oder mehreren Kameras sowie gegebenenfalls mit einer Lichtquelle versehene Träger, beispielsweise mittels eines Leitstabes, dem sogenannten Schiebeaal, in die zu inspizierende Rohrleitung eingebracht und wird letztere auf Ablagerungen, Leckagen oder dergleichen untersucht. Ist der Träger ferner mit einem Werkzeug, wie beispielsweise einem Fräswerkzeug, ausgestattet, kann sogleich eine Sanierung der Rohrleitung stattfinden, indem z.B. Ablagerungen im Innern der Rohrleitung, wie Kalk, Biorasen etc., mittels des Fräswerkzeugs entfernt werden.

Der Träger bekannter Vorrichtungen ist üblicherweise weitgehend zylinder- oder quaderförmig ausgestaltet, wobei seine in Axialrichtung der Rohrleitung betrachteten axialen Enden abgerundet sein können, um den Vortrieb des Trägers im Innern der Rohrleitung zu erleichtern. Als problematisch erweist sich gleichwohl die Durchführung des Trägers gattungsgemäßer Vorrichtung durch Rohrbiegungen, wie sie insbesondere bei Hausanschlüssen verbreitet verbaut werden. Beim Passieren solcher Biegungen besteht die Gefahr, dass der Träger blockiert, wobei er entweder -sofern der Träger "von hinten" durch die Rohrleitung hindurch geschoben wird - am Außenradius einer solchen Rohrbiegung, oder - sofern der Träger "von vorne" durch die Rohrleitung hindurch gezogen wird - am Innenradius der Rohrbiegung hängenbleibt. Diese Gefahr besteht um so mehr, wenn mehr oder minder scharfkantige Werkzeuge von dem Träger vorstehen und/oder wenn gerade im Bereich einer Rohrbiegung deren freier Querschnitt durch Ablagerungen an der Innenwand zumindest lokal verengt ist.

Die DE 100 35 221 C2 beschreibt eine gattungsgemäße Vorrichtung zur Sanierung von Rohrleitungen, welche dem Problem eines Hindurchbewegens durch enge Rohrbiegungen dadurch zu begegnen versucht, dass ein das Werkzeug tragender Abschnitt des Trägers mittels zweier Gelenke an einem länglichen, rotationssymmetrischen, im Wesentlichen zylindrischen Abschnitt des Trägers angelenkt ist, wobei das eine Gelenk eine Drehbarkeit der beiden Trägerabschnitte relativ zueinander um die Längsmittelachse der Rohrleitung ermöglicht, während das andere Gelenk eine Schwenkbarkeit der beiden Trägerabschnitte relativ zueinander um eine hierzu senkrechte Schwenkachse gewährleistet. Beide Gelenke sind von je einer, in einem jeweiligen Trägerabschnitt untergebrachten Antriebseinheit, mit welcher sie über Hohlwellengetriebe in Verbindung stehen, betätigt. Nachteilig ist einerseits der in hohem Maße aufwändige Aufbau des Trägers einschließlich der beiden motorisch betätigten Gelenke, welche zudem zusätzlichen Bauraum erfordern und einer möglichst kompakten Bauweise, wie sie hinsichtlich eines Durchfahrens enger Rohrbiegungen günstig wäre, entgegensteht. Andererseits lässt die Ausgestaltung des insgesamt sehr langgestreckten Trägers trotz der Schwenkbarkeit seines das Werkzeug tragenden Abschnittes ein Durchfahren sehr enger Rohrbiegungen nicht zu.

Der Erfindung liegt daher die Aufgabe zugrunde, eine Vorrichtung der eingangs genannten Art auf einfache und kostengünstige Weise dahingehend weiterzubilden, dass sie unter zumindest weitestgehender Vermeidung der vorgenannten Nachteile Rohrbiegungen zuverlässig zu passieren vermag.

Erfindungsgemäß wird diese Aufgabe bei einer Vorrichtung der eingangs genannten Art dadurch gelöst, dass ein erster Querschnitt des Trägers in einer ersten Ebene, welche die Längsmittelachse der Rohrleitung einschließt, eine im Wesentlichen geradlinige oder konkave Unterseite aufweist, von deren äußeren Enden sich zumindest die endseitigen Abschnitte einer Oberseite bogenförmig konvex nach oben und von dem jeweiligen äußeren Ende der Unterseite in Richtung deren entgegengesetztem Ende fort erstrecken, wobei der Krümmungsradius oder die Krümmungsradien der sich bogenförmig konvex nach oben und von den jeweiligen äußeren Enden der Unterseite fort erstreckenden, endseitigen Abschnitte der Oberseite des ersten Querschnittes mehr als 50% des maximalen Abstandes der Unterseite von der Oberseite beträgt bzw. betragen.

Die erfindungsgemäße Ausgestaltung der Geometrie des Trägers ermöglicht ein einfaches Passieren von Rohrbiegungen, indem der Träger derart in Bezug auf die Rohrbiegung angeordnet wird, dass die Unterseite seines ersten Querschnittes in der ersten Ebene, welche die Längsmittelachse der Rohrleitung einschließt, am Innenradius der Rohrbiegung und die Oberseite seines ersten Querschnittes am Außenradius der Rohrbiegung positioniert ist, so dass die sich von der Unterseite des ersten Querschnittes bogenförmig konvex nach oben und von dem jeweiligen äußeren Ende der Unterseite in Richtung deren entgegengesetztem Ende fort erstreckenden Abschnitte der Oberseite des ersten Querschnittes am Außenradius der Rohrbiegung entlang gleiten können, ohne dass es zu einer Blockierung des Trägers im Innern der Rohrbiegung kommt. Dabei vermögen die besagten, bogenförmig konvex verlaufenden Abschnitte des ersten Querschnittes auch etwaige lokalen Ablagerungen in der Rohrbiegung zu passieren, da die bogenförmige Ausgestaltung ein Verhaken an derartigen Ablagerungen verhindert. Die Unterseite des ersten Querschnittes des Trägers in der ersten Ebene, welche die Längsmittelachse der Rohrleitung einschließt - d.h. in der Krümmungsebene einer Rohrbiegung -, kann dabei entweder im Wesentlichen geradlinig sein, so dass die Querschnittsform eine etwa halbmondförmige Gestalt einnehmen kann, oder sie kann geringfügig konkav nach innen gekrümmt sein, insbesondere mit einem Radius, welcher mehr als doppelt so groß, insbesondere mehr als dreimal so groß, ist wie der Radius oder die Radien der bogenförmig konvex verlaufenden Abschnitte der Oberseite des Querschnittes, so dass der erste Querschnitt des Trägers in der ersten Ebene eine etwa hörnchen- oder sicherförmige Gestalt besitzen kann, um noch besser am Innenradius einer Rohrbiegung vorbeigeführt werden zu können.

Der Krümmungsradius oder die Krümmungsradien der sich bogenförmig konvex nach oben und von den jeweiligen äußeren Enden der Unterseite fort erstreckenden, endseitigen Abschnitte der Oberseite des ersten Querschnittes beträgt bzw. betragen in vorteilhafter Ausgestaltung wenigstens 60%, insbesondere wenigstens 70, vorzugsweise wenigstens 80%, des maximalen Abstandes der Unterseite von der Oberseite, wobei diese(r) Krümmungsradius/-radien gemäß besonders bevorzugter Ausführungsformen mehr als 90%, insbesondere etwa 100% oder auch etwas mehr als 100% des maximalen Abstandes der Unterseite von der Oberseite des ersten Querschnittes betragen können, um für eine etwa halbmondförmige Ausgestaltung des ersten Querschnittes zu sorgen, welche sich als ideal zum Hindurchführen des Trägers durch Rohrbiegungen erwiesen hat.

In vorteilhafter Ausgestaltung kann vorgesehen sein, dass zwischen den äußeren Enden der im Wesentlichen geradlinigen oder konkaven Unterseite des ersten Querschnittes des Trägers in der ersten Ebene, welche die Längsmittelachse der Rohrleitung einschließt, und den sich bogenförmig konvex nach oben und von dem jeweiligen äußeren Ende der Unterseite fort erstreckenden endseitigen Abschnitten der Oberseite ein konvexer Übergangsbereich mit einem kleineren Radius als der Radius oder die Radien der sich bogenförmig konvex nach oben und von dem jeweiligen äußeren Ende der Unterseite fort erstreckenden endseitigen Abschnitte der Oberseite angeordnet ist. Der Übergangsbereich zwischen der geradlinigen oder geringfügig konkaven Unterseite des ersten Querschnittes des Trägers in der ersten Ebene und der bogenförmig konvex verlaufenden Abschnitte der Oberseite ist folglich vorzugsweise abgerundet, wobei der Krümmungsradius dieser konvexen Übergangsbereiche zweckmäßigerweise höchstens halb so groß, vorzugsweise höchsten ein Drittel so groß, ist wie der Radius oder die Radien der bogenförmig konvex verlaufenden Abschnitte der Oberseite des ersten Querschnittes.

In weiterhin vorteilhafter Ausgestaltung kann vorgesehen sein, dass die sich bogenförmig konvex nach oben und von dem jeweiligen äußeren Ende der Unterseite fort erstreckenden endseitigen Abschnitte der Oberseite des ersten Querschnittes des Trägers in der ersten Ebene, welche die Längsmittelachse der Rohrleitung einschließt, im Wesentlichen kreisbogenförmig sind, wobei der Radius eines solchen Kreisbogens, wie oben erwähnt, wenigstens 80%, vorzugsweise wenigstens 90%, insbesondere wenigstens 100%, des maximalen Abstandes der Oberseite von der Unterseite des ersten Querschnittes des Trägers in der ersten Ebene beträgt. Die Länge der kreisbogenförmigen Abschnitte sollte vorzugsweise zwischen 60° und 90°, insbesondere zwischen 70° und 90° betragen.

Gemäß einer Ausführungsvariante kann vorgesehen sein, dass zwischen den sich bogenförmig konvex nach oben und von dem jeweiligen äußeren Ende der Unterseite fort erstreckenden endseitigen Abschnitten der Oberseite des ersten Querschnittes des Trägers in der ersten Ebene, welche die Längsmittelachse der Rohrleitung einschließt, ein zentraler Abschnitt angeordnet ist, welcher sich im Wesentlichen geradlinig oder konkav etwa parallel zur Unterseite dieses Querschnittes - also etwa in Axialrichtung der Rohrleitung - erstreckt. Dabei sollte die axiale Länge des zentralen Abschnittes des ersten Querschnittes des Trägers in der ersten Ebene jedenfalls kleiner sein als die axiale Länge der endseitigen Abschnitte der bogenförmig konvex verlaufenden, endseitigen Abschnitte des ersten Querschnittes, um eine einwandfreie Passage von Rohrbiegungen zu gewährleisten. Ein derartiger zentraler Abschnitt des ersten Querschnittes ist insbesondere beim Passieren des Trägers der Vorrichtung durch im Wesentlichen lineare Rohrleitungsabschnitte von Vorteil, indem der zentrale Abschnitt des Querschnittes für ein besseres Entlanggleiten des Trägers an der Rohrinnenwandung sorgt.

In bevorzugter Ausführung ist ferner vorgesehen, dass ein zweiter Querschnitt des Trägers in einer zweiten Ebene, welche senkrecht zur Längsmittelachse der Rohrleitung
- sowie senkrecht zur ersten Ebene, welche die Längsmittelachse der Rohrleitung einschließt - angeordnet ist, im Wesentlichen kreisförmig ist und gegebenenfalls
- an den zentralen Bereichen seiner beiden entgegengesetzten seitlichen Abschnitte; und/oder
- am zentralen Bereich seiner Unterseite; und/oder
- am zentralen Bereich seiner Oberseite
   geradlinig oder konvex mit einem größeren Krümmungsradius als der des kreisförmigen zweiten Querschnittes ausgebildet ist. Der zweite Querschnitt des Trägers in der zweiten Ebene passt sich folglich vorzugsweise dem Querschnitt der Rohrleitung im Wesentlichen an, wobei der Radius des zweiten Querschnittes beispielsweise an die üblicherweise genormten Innenquerschnitte gebräuchlicher Rohrleitungen, wie beispielsweise solcher, wie sie insbesondere bei Hausanschlüssen Verwendung finden, angepasst sein kann.

Der Träger kann zweckmäßig in Bezug auf
- den ersten Querschnitt des Trägers in der ersten Ebene, welche die Längsmittelachse der Rohrleitung einschließt; und/oder
- den zweiten Querschnitt des Trägers in der zweiten Ebene, welche senkrecht zur Längsmittelachse der Rohrleitung
- bzw. senkrecht zur ersten Ebene - angeordnet ist, im Wesentlichen spiegelsymmetrisch sein.

In weiterhin vorteilhafter Ausgestaltung kann vorgesehen sein, dass ein dritter Querschnitt des Trägers in einer sowohl in Bezug auf die erste Ebene als auch in Bezug auf die zweite Ebene senkrecht angeordneten, dritten Ebene im Wesentlichen rechteckförmig ist, wobei die Ecken dieses rechteckförmigen dritten Querschnittes, insbesondere kreisbogenförmig, abgerundet sind, um beim Passieren einer Rohrbiegung an den in Bezug auf die Rohrbiegung äußeren Wandungsabschnitten zur Anlage zu kommen. Die Breite, d.h. die kurze Seite des etwa rechteckförmigen dritten Querschnittes mit abgerundeten Ecken, kann wiederum an die üblicherweise genormten Durchmesser gebräuchlicher Rohrleitungen, wie beispielsweise solcher, wie sie insbesondere bei Hausanschlüssen Verwendung finden, angepasst sein.

Wie eingangs angedeutet, sieht eine vorteilhafte Ausgestaltung einer erfindungsgemäßen Vorrichtung vor, dass der Träger wenigstens ein Werkzeug, insbesondere ein Fräswerkzeug, trägt. Um eine Beschädigung eines solchen Werkzeugs während des Hindurchführens des Trägers durch eine Rohrleitung sowie insbesondere ein Verklemmen oder Verhaken des Werkzeugs im Innern des Rohres, wie insbesondere an einer Rohrbiegung, zuverlässig zu verhindern, sieht die Erfindung vorzugsweise vor, dass das Werkzeug zwischen einer Ruhestellung, in welcher es innerhalb des Trägers angeordnet ist, und einer Betriebsstellung, in welcher es von der Oberfläche des Trägers vorragt, hin und her verlagerbar ist. Der Träger dient folglich dem Werkzeug als Gehäuse in dessen Ruhrstellung, aus welcher das Werkzeug bedarfsweise, z.B. wenn eine sanierungsbedürftige Stelle in der Rohrleitung erkannt worden ist, in seine Betriebsstellung verbracht werden kann, in welcher es aus dem Träger bis an die Rohrinnenwandung herausragt. Die erfindungsgemäße Geometrie des Trägers bietet dem Werkzeug hierbei einen maximal möglichen Bauraum unter gleichzeitiger Gewährleistung eines einwandfreien Passierens von Rohrbiegungen. Selbstverständlich ist es überdies möglich, dass in dem Gehäuse eine oder mehrere Kameras untergebracht sind, deren Linse beispielsweise im Wesentlichen bündig in die Außenkontur des Trägers eingebracht ist und mit letzterer folglich fluchtet, wobei ferner wenigstens eine Lichtquelle vorgesehen sein kann, welche für die Ausleuchtung des Innenraums einer zu inspizierenden Rohrleitung dient, um sanierungsbedürftige Stellen ausfindig zu machen.

Das Werkzeug kann vorzugsweise ferner um eine - insbesondere in Bezug auf den ersten Querschnitt des Trägers in der ersten Ebene, welche die Längsmittelachse der Rohrleitung einschließt, im Wesentlichen senkrechte - Schwenkachse schwenkbar sein, so dass es zumindest in seiner Betriebsstellung, in welcher es von dem Träger vorragt, einerseits in Bezug auf die Längsmittelachse einer zu inspizierenden Rohrleitung unter einem endlichen Winkel schräg angeordnet werden kann, um die Rohrwandung zu bearbeiten, während es andererseits etwa parallel zur Längsmittelachse einer zu inspizierenden Rohrleitung angeordnet werden kann, um beispielsweise mehr oder minder gänzliche Verstopfungen der Rohrleitung beseitigen zu können.

Das Werkzeug kann in diesem Zusammenhang grundsätzlich auf beliebige bekannt Weise, wie beispielsweise (elektro)motorisch, zwischen seiner Ruhe- und seiner Betriebsstellung hin und her verlagerbar sein, wobei das Werkzeug vorzugsweise mittels wenigstens einer hydraulisch, pneumatisch oder hydropneumatisch betätigbaren Kolben-/Zylindereinheit zwischen seiner Ruhestellung und seiner Betriebsstellung hin und her verlagerbar ist. Entsprechend kann in vorteilhafter Ausgestaltung der Antrieb des Werkzeugs selbst von hydraulischer, pneumatischer oder hydropneumatischer Art sein.

Das Werkzeug kann zweckmäßig an zumindest einem der sich bogenförmig konvex nach oben und von dem jeweiligen äußeren Ende der Unterseite fort erstreckenden endseitigen Abschnitte der Oberseite des ersten Querschnittes des Trägers, welcher die Längsmittelachse der Rohrleitung einschließt, angeordnet sein, so dass es von dem Träger - in Axialrichtung der Rohrleitung betrachtet - schräg in Richtung der Rohrwandung vorsteht, wenn es in seine Betriebsstellung verbracht worden ist.

Insbesondere dann, wenn der Träger mit einem Werkzeug bestückt ist, kann es ferner zweckmäßig sein, wenn der Träger eine Festsetzeinrichtung aufweist, welche zum Festsetzen des Trägers im Innern der Rohrleitung dient. Derartige Festsetzeinrichtung sind als solche bekannt und können beispielsweise mit Fluiddruck befüllbare, an der Außenseite des Trägers angeordnete Ballons oder "Airbags" aufweisen, welche den Träger in ihrem mit Fluiddruck befüllten Zustand radial gegen die Rohrinnenwand andrücken. Desgleichen sein beispielsweise radial nach außen klappbare oder teleskopierbare Blockiereinrichtungen bekannt, welche den Träger ebenfalls radial gegen die Rohrinnenwand anzupressen vermögen und den Träger dadurch bedarfsweise festsetzen.

Der Träger kann zweckmäßigerweise mit einem - seinerseits beispielsweise mehrere, gelenkig miteinander verbundene Segmente umfassenden - Schiebeaal verbunden sein, um ihn motorisch oder auch manuell durch eine Rohrleitung hindurch bewegen zu können. Ein solcher Schiebeaal ist zweckmäßigerweise um eine in Bezug auf die erste Ebene, welche die Längsmittelachse der Rohrleitung einschließt, senkrechte Achse schwenkbar an dem Träger befestigt, um ein Verschwenken des Trägers in Bezug auf den Schiebeaal senkrecht zur Biegeebene einer Rohrbiegung, welche der Träger passieren soll, zu verschwenken. Die Schwenkachse des Schiebeaals ist dabei vorzugsweise im Übergangsbereich eines der äußeren Enden der im Wesentlichen geradlinigen oder konkaven Unterseite des ersten Querschnittes des Trägers in der ersten Ebene, welche die Längsmittelachse der Rohrleitung einschließt, und dem sich an dieses Ende der Unterseite anschließenden, sich bogenförmig konvex nach oben und von diesem Ende der Unterseite fort erstreckenden endseitigen Abschnittes der Oberseite - also im Bereich eines der beiden im Wesentlichen spitz zulaufenden Enden des etwa halbmond- oder hörnchen- bzw. sichelförmigen ersten Querschnittes des Trägers in der ersten Ebene - angeordnet.

Während der Träger grundsätzlich auch beispielsweise manuell, wie mittels des Schiebeaals, um die Längsmittelachse der zu inspizierenden Rohrleitung drehbar sein kann, um ihn mit seinem ersten Querschnitt parallel zur Krümmungsebene der Rohrbiegung anordnen und/oder ein Werkzeug desselben in Richtung einer sanierungsbedürftigen Stelle der Rohrleitung ausrichten zu können, kann gemäß einer bevorzugten Ausführungsform ferner vorgesehen sein, dass dem Träger eine zur Rotation desselben um die Längsmittelachse der Rohrleitung ausgebildete Dreheinrichtung zugeordnet ist. Eine solche Dreheinrichtung, welche z.B. mittels des Schiebeaals bzw. eines Abschnittes desselben mit dem Träger verbunden sein kann, kann zu diesem Zweck insbesondere ein erstes Teil, welches - in Axialrichtung der Rohrleitung drehfest - mit dem Träger verbunden ist, sowie ein in Bezug auf das erste Teil um die Längsmittelachse der Rohrleitung drehbares, zweites Teil aufweisen, welches an der Innenwand der Rohrleitung festsetzbar ist. In Bezug auf die Festsetzeinrichtung des zweiten Teils der Dreheinrichtung an der Innenwand der Rohrleitung gilt im Wesentlichen das oben zu einer vorteilhaften Festsetzeinrichtung des Trägers gesagte. Zum Drehen des Trägers um die Längsmittelachse der Rohrleitung kann folglich das zweite Teil der Dreheinrichtung an der Rohrinnenwand festgesetzt und das zweite Teil gemeinsam mit dem Träger relativ zu dem ersten Teil um die Längsachse der Rohrleitung gedreht werden, bis der Träger die gewünschte Ausrichtung in Bezug auf eine Rohrkrümmung und/oder auf eine mittels seines Werkzeuges zu bearbeitende, sanierungsbedürftige Stelle der Rohrleitung besitzt.

Was den Antrieb eines Werkzeugs des Trägers und/oder der Dreheinrichtung desselben betrifft, so sieht eine vorteilhafte Ausgestaltung vor, dass ein, insbesondere hydraulischer, pneumatischer oder hydropneumatischer, Antrieb eines Werkzeugs des Trägers, welcher insbesondere sowohl zum Bewegen des Werkzeugs zwischen seiner Ruhe- und seiner Betriebsstellung als auch zum Antrieb des Werkzeugs selbst dient, und gegebenenfalls der Dreheinrichtung außerhalb des Trägers angeordnet ist. Der Antrieb des Werkzeugs des Trägers und gegebenenfalls der Dreheinrichtung kann dabei beispielsweise in einer Antriebseinheit angeordnet sein, welche mittels in dem Schiebeaal angeordneter Leitungen mit dem Werkzeug des Trägers und gegebenenfalls mit der Dreheinrichtung verbunden ist.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische perspektivische Ansicht einer Ausführungsform einer erfindungsgemäßen Vorrichtung zur Inspektion und/oder Sanierung von Rohrleitungen, mit einem mit einem Fräswerkzeug bestückten Träger und einer über einen Schiebeaal mit dem Träger verbundenen Dreheinrichtung;
- Fig. 2: eine Seitenansicht des Trägers der Vorrichtung gemäß Fig. 1 in einer ersten Ebene, welche die Längsmittelachse einer zu inspizierenden Rohrleitung einschließt und der Biegeebene einer Rohrbiegung entspricht, durch welche der Träger hindurch bewegt werden soll, mit dem Werkzeug in einer aus dem Träger ausgezogenen Betriebsstellung;
- Fig. 3: eine der Fig. 2 entsprechende Seitenansicht des Trägers der Vorrichtung gemäß Fig. 1 mit dem Werkzeug in seiner in den Träger eingeschobenen Ruhestellung;
- Fig. 4: eine perspektivische Detailansicht des Trägers gemäß Fig. 1 bis 3 ohne Werkzeug;
- Fig. 5: eine den Fig. 2 und 3 entsprechende Seitenansicht des Trägers entsprechend Pfeil V gemäß Fig. 4 in einer ersten Ebene, welche die Längsmittelachse einer zu inspizierenden Rohrleitung einschließt und der Biegeebene einer Rohrbiegung entspricht, durch welche der Träger hindurch bewegt werden soll;
- Fig. 6: eine Frontansicht des Trägers entsprechend Pfeil VI der Fig. 4 in einer zweiten Ebene, welche senkrecht zu der ersten Ebene und senkrecht zur Längsmittelachse einer zu inspizierenden Rohrleitung angeordnet ist; und
- Fig. 7: eine Draufsicht auf den Träger entsprechend Pfeil VII der Fig. 4 in einer dritten Ebene, welche sowohl zu der ersten Ebene (Fig. 5) als auch zu der zweiten Ebene (Fig. 6) senkrecht angeordnet ist.

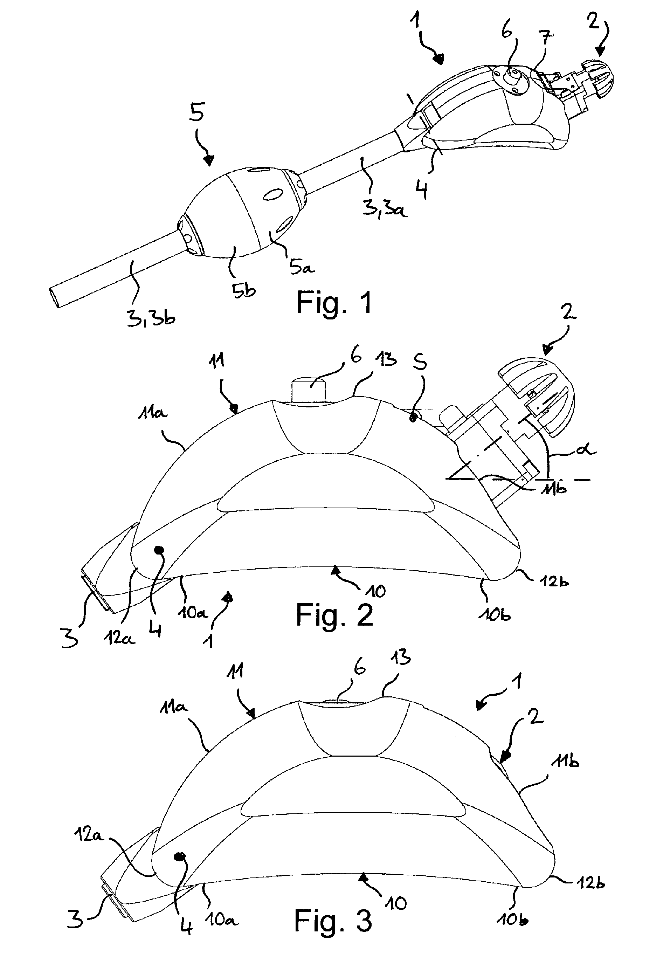

In Fig. 1 ist eine schematische perspektivische Ansicht einer Vorrichtung zur Inspektion und/oder Sanierung von zeichnerisch nicht dargestellten Rohrleitungen wiedergegeben. Die Vorrichtung umfasst einen durch eine zu inspizierende Rohrleitung hindurch führbaren Träger 1, welcher beim vorliegenden Ausführungsbeispiel mit einem Werkzeug 2 in Form eines Fräswerkzeugs bestückt ist, welches beispielsweise im Bereich des freien axialen, in Fig. 1 rechten Ende des Trägers 1 angeordnet ist. Das Werkzeug 2 ist zwischen einer in Fig. 1 und 2 dargestellten Betriebsstellung, in welcher es von dem Träger 1 in Richtung der Wandung einer zu inspizierenden Rohrleitung (nicht gezeigt) vorragt, und einer in Fig. 3 dargestellten Ruhestellung, in welcher es praktisch gänzlich im Innern des Trägers 1 aufgenommen ist und zumindest nicht nennenswert von der Außenkontur des Trägers 1 vorsteht, hin und her verlagerbar, was beispielsweise mittels einer im Innern des Trägers 1 untergebrachten, z.B. hydraulisch betätigbaren Kolben-/Zylindereinheit (ebenfalls nicht gezeigt) geschehen kann. Das Werkzeug 2 ist ferner um einen Winkel α, welcher im vorliegenden Fall etwa 45° beträgt, zwischen seiner in Fig. 2 dargestellten Betriebsstellung, in welcher es in der ersten Ebene in Bezug auf die Längsmittelachse der zu inspizierenden Rohrleitung (nicht gezeigt) unter dem Winkel α angeordnet ist, so dass es die Rohrinnenwand zu bearbeiten vermag, und einer in Fig. 2 nicht wiedergegebenen, weiteren Betriebsstellung, in welcher es etwa parallel zur Längsmittelachse der Rohrleitung und insbesondere axial fluchtend mit dieser angeordnet ist, um eine senkrecht zur ersten Ebene (d.h. senkrecht zur Zeichnungsebene der Fig. 2) angeordnete Schwenkachse S verschwenkbar, um auch stirnseitig des Trägers 1 angeordnete Verstopfungen der Rohrleitung beseitigen zu können. Der Träger 1 kann überdies mit einer oder mehreren Kameras und gegebenenfalls (einer) Beleuchtungseinrichtung(en) (jeweils nicht gezeigt) ausgestattet sein, welche zweckmäßiger Weise ebenso im Wesentlichen mit der Oberflächenkontur des Trägers 1 fluchten wie dessen Werkzeug 2 in der in Fig. 3 wiedergegebenen Ruhestellung.

Im Bereich seines dem Werkzeug 2 entgegengesetzten axialen, in Fig. 1 linken Endes ist der Träger 1 mit einem zu seinem - manuellen oder maschinell angetriebenen - Vortrieb innerhalb einer Rohrleitung dienenden Schiebeaal 3 nach Art eines Leitstabes verbunden, wobei der Schiebeaal 3 insbesondere um eine in Bezug auf eine erste Ebene, welche die Längsmittelachse der Rohrleitung einschließt und der Zeichnungsebene gemäß Fig. 2 und 3 entspricht, senkrechte Achse 4 schwenkbar an dem Träger 1 befestigt ist, um letzterem den Durchgang durch Rohrbiegungen zu erleichtern. Der Schiebeaal 3 kann zu diesem Zweck ferner mehrere, um insbesondere in Bezug auf die Achse 4 parallele Achsen schwenkbare Segmente (nicht gezeigt) aufweisen. Der Träger 1 ist darüber hinaus mit einer Festsetzeinrichtung 6 versehen, welche zum bedarfsweisen Festsetzen des Trägers 1 im Innern der zu inspizierenden Rohrleitung dient, z.B. dann, wenn eine sanierungsbedürftige Stelle an der Innenwand der Rohrleitung mittels des Werkzeugs 2 bearbeitet werden soll. Die Festsetzeinrichtung 6, welche sich in der in Fig. 2 dargestellten Situation in ihrer von der Oberfläche des Trägers 1 im Wesentlichen radial nach außen vorragenden Betriebsstellung und in der in Fig. 3 dargestellten Situation in ihrer in den Träger 1 eingezogenen Ruhestellung befindet, weist z.B. einen zwischen der Ruhe- und der Betriebsstellung hin und her verlagerbaren Stift aus einem Material mit hohem Reibungskoeffizienten, z.B. Gummi, auf, um den Träger 1 an einem jeweiligen Rohrabschnitt verklemmen zu können. Die Verlagerung der Festsetzeinrichtung 6 kann entsprechend der des Werkzeugs 2 beispielsweise mittels einer z.B. gleichfalls hydraulisch betätigbaren Kolben-/Zylindereinheit erfolgen, welche im Innern des Trägers 1 angeordnet ist.

Dem Träger 1 ist ferner eine mittels eines Abschnittes 3a des Schiebeaals 3 mit diesem verbundene Dreheinrichtung 5 zugeordnet, welche zum Drehen des Trägers um die Längsmittelachse der zu inspizierenden Rohrleitung dient. Die Dreheinrichtung 5 umfasst hierbei ein erstes, über den Abschnitt 3a des Schiebeaal1 3 drehfest mit dem Träger 1 verbundenes Teil 5a, sowie ein in Bezug auf das erste Teil 5a um die Längsmittelachse der Rohrleitung drehbares zweites Teil 5b, welches bedarfsweise an der Innenwand der Rohrleitung festsetzbar ist. Die nicht dargestellte Festsetzeinrichtung des zweiten Teils 5b der Dreheinrichtung 5 kann beispielsweise derjenigen 6 des Trägers 1 entsprechen. Ein, wie bereits erwähnt z.B. hydraulischer, Antrieb des Werkzeugs 2 des Trägers 1, dessen Verlagerungsmechanismus zwischen seiner Ruhe- und seiner Betriebsstellung, der Festsetzeinrichtung 6 des Trägers 1 und der Dreheinrichtung 5 sowie der Teile 5a, 5b der Dreheinrichtung relativ zueinander kann insbesondere außerhalb des Trägers 1 und außerhalb der Dreheinrichtung 5 angeordnet sein, wobei der Antrieb z.B. in einer externen, nicht durch die zu inspizierende Rohrleitung hindurch führbaren Einheit (nicht gezeigt) vorgesehen sein kann, welche über in dem Schiebeaal 5 angeordnete Hydraulikleitungen mit dem Träger 1 bzw. mit der Dreheinrichtung 5 verbunden ist.

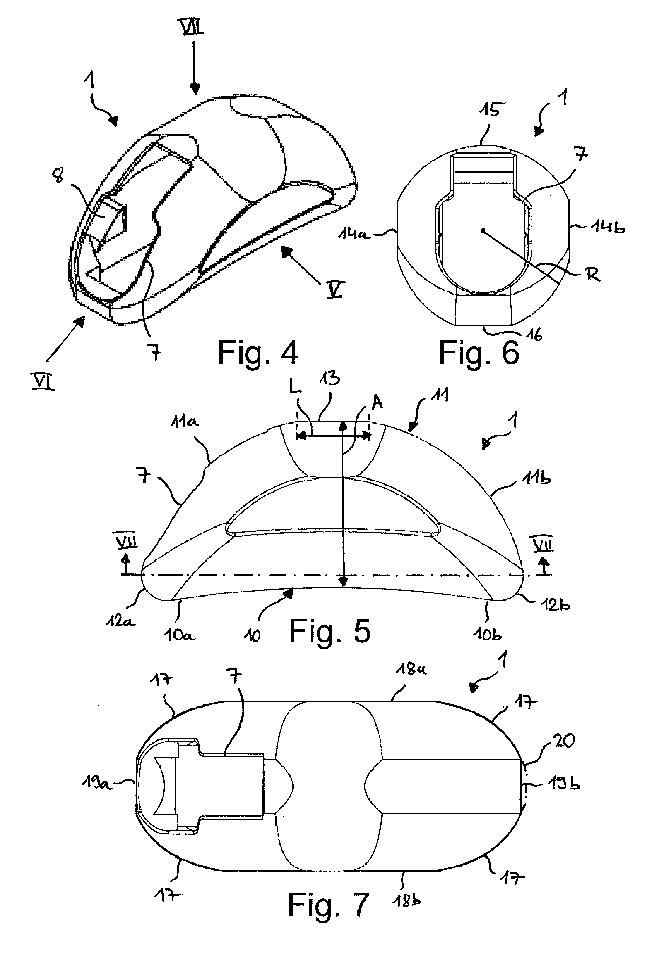

In Fig. 4 bis 7 sind verschiedene Ansichten des in Form eines Gehäuses zur Aufnahme des Werkzeugs 2, der Kamera(s) und Beleuchtungseinrichtung(en) sowie der Festsetzeinrichtung 6 ausgestalteten Trägers 1 wiedergegeben, wobei die vorgenannten Einrichtungen zur Erleichterung der Übersicht weggelassen worden sind.

Wie insbesondere der in Fig. 5 dargestellten Seitenansicht des Trägers 1 zu entnehmen ist, deren Außenkontur dem zentralen Querschnitt des Trägers 1 in einer ersten Ebene (in Fig. 5 der Zeichnungsebene) entspricht, welche die Längsmittelachse einer zu inspizierenden Rohrleitung (nicht gezeigt) einschließt und welche der Krümmungsebene einer solchen Rohrleitung entspricht, durch welche der Träger 1 hindurch bewegt werden soll, weist der Querschnitt des Trägers 1 in der ersten Ebene eine etwa geradlinige oder -wie es beim dargestellten Ausführungsbeispiel der Fall ist - geringfügig konkav gekrümmte Unterseite 10 auf, von deren äußeren, in Fig. 5 rechten und linken Enden 10a, 10b, sich die endseitigen Abschnitte 11a, 11b einer Oberseite 11 bogenförmig konvex nach oben und von dem jeweiligen äußeren Ende 10a, 10b der Unterseite 10 in Richtung deren entgegengesetzten Ende 10b, 10a fort erstrecken. Die bogenförmig konvex nach oben verlaufenden Abschnitte 11a, 11b der Oberseite 11 des ersten Querschnittes sind beim vorliegenden Ausführungsbeispiel etwa kreisbogenförmig und weisen einen Krümmungsradius auf, welcher wenigstens 80% des maximalen Abstandes A der Unterseite 10 des ersten Querschnittes von der Oberseite 11 beträgt, wobei dieser Krümmungsradius beim vorliegenden Ausführungsbeispiel etwas größer ist als der genannten Abstand A. Überdies ist zwischen den äußeren Enden 10a, 10b der Unterseite 10 des ersten Querschnittes und den sich bogenförmig konvex nach oben erstreckenden Abschnittes 11a, 11b der Oberseite 11 jeweils ein konvexer Übergangsbereich 12a, 12b mit einem kleineren Radius als der Radius der Abschnittes 11a, 11b angeordnet. Der aus Fig. 5 erkennbare erste Querschnitt des Trägers 1 in der ersten Ebene, welche die Längsmittelachse einer zu inspizierenden Rohrleitung (nicht gezeigt) einschließt, besitzt folglich eine im Wesentlichen hörnchen- bzw. sicherförmige Gestalt, welche es dem Träger 1 ermöglicht, in zuverlässiger Weise durch eine Rohrbiegung hindurch geführt zu werden, ohne dass die Gefahr eines Blockierens desselben in der Rohrleitung besteht. Im Falle des gezeigten Ausführungsbeispiels ist zwischen den sich bogenförmig konvex nach oben erstreckenden endseitigen Abschnitten 11a, 11b der Oberseite 11 des ersten Querschnittes ferner ein zentraler Abschnitt 13 vorgesehen, welcher sich im Wesentlichen geradlinig oder geringfügig konkav gekrümmt etwa parallel zur Unterseite 10 des ersten Querschnittes erstreckt und dessen axiale Länge L kleiner ist als die axiale Länge der endseitigen Abschnitte 11a, 11b, wobei der zentrale Abschnitt 13 das Hindurchführen des Trägers durch eine geradlinig verlaufende Rohrleitung erleichtert. Der maximale Abstand A der Oberseite 13 von der Unterseite 10 des ersten Querschnittes kann im Übrigen etwa dem Durchmesser der zu inspizierenden Rohrleitung entsprechen und im Falle einer angedachten Verwendung des Trägers 1 zur Inspektion von Hausanschlüssen beispielsweise 100 mm, 150 mm etc. betragen.

Fig. 6 zeigt eine Frontansicht des Trägers 1 gemäß Fig. 4 und 5 in einer zweiten Ebene, welche senkrecht zu der ersten Ebene und senkrecht zur Längsmittelachse einer zu inspizierenden Rohrleitung (nicht dargestellt), durch welche der Träger 1 hindurch bewegt werden soll, angeordnet ist, wobei die Außenkontur der in Fig. 6 wiedergegebenen Frontansicht einem - zentralen - zweiten Querschnitt des Trägers 1 in der zweiten Ebene (in Fig. 6 der Zeichnungsebene) entspricht. Wie der Fig. 6 zu entnehmen ist, weist der zweite Querschnitt des Trägers 1 in der zweiten Ebene eine etwa kreisförmige Gestalt auf, deren Durchmesser wiederum etwa dem Durchmesser der zu inspizierenden Rohrleitung entsprechen kann. An den zentralen Bereichen 14a, 14b der beiden entgegengesetzten seitlichen Abschnitte des zweiten Querschnittes sowie im zentralen Bereich 15 dessen Oberseite und im zentralen Bereich 16 dessen Unterseite weicht der zweite Querschnitt von seiner kreisförmigen Gestalt insoweit ab, als die zentralen Bereiche 14a, 14b, 15, 16 abgeflacht, d.h. etwa geradlinig bzw. ebenfalls konvex, aber mit einem größeren Krümmungsradius als der Radius R des kreisförmigen zweiten Querschnittes, ausgebildet sind. In Fig. 4 bis 6 ist ferner erkennbar, dass der Träger 1 in Bezug auf die erste Ebene, welche die Längsmittelachse der zu inspizierenden Rohrleitung einschließt (Fig. 5), sowie in Bezug auf die zweite, hierzu senkrecht sowie senkrecht zur Längsmittelachse der Rohrleitung angeordnete Ebene (Fig. 6) spiegelsymmetrisch ist.

In Fig. 7 ist schließlich eine Draufsicht auf den Träger 1 gemäß Fig. 4 bis 6 in einer dritten Ebene dargestellt, welche sowohl zu der ersten Ebene (Fig. 5) bzw. zur Längsmittelachse einer zu inspizierenden Rohrleitung (nicht dargestellt), durch welche der Träger 1 hindurch bewegt werden soll, als auch zu der zweiten Ebene (Fig. 6) senkrecht angeordnet ist, wobei die Außenkontur der in Fig. 7 wiedergegebenen Draufsicht einem dritten Querschnitt des Trägers 1 gemäß der Schnittlinie VII-VII der Fig. 5 entspricht. Demgemäß ist der dritte Querschnitt im Wesentlichen rechteckförmig, wobei die Ecken 17 des dritten Querschnittes abgerundet sind. Der Krümmungsradius dieser abgerundeten Ecken 17 des dritten Querschnittes entspricht zweckmäßig etwa dem halben Abstand der beiden langen Seiten 18a, 18b des Rechtecks, wobei der Abstand der beiden langen Seiten 18a, 18b wiederum etwa dem Durchmesser der zu inspizierenden Rohrleitung entsprechen kann. Anstelle der kurzen Seiten 19a, 19b des Rechtecks kann alternativ auch vorgesehen sein, dass die langen Seiten 18a, 18b mittels durchgehender, insbesondere etwa halbkreisförmiger Bogenabschnitte (nicht gezeigt) miteinander verbunden sind, wie es in Fig. 7 rechts mittels der Strichpunktlinie 20 angedeutet ist.

Die oben beschriebene Geometrie des Trägers 1 verleiht ihm einerseits eine einwandfreie Hindurchführbarkeit durch eine zu inspizierende Rohrleitung, indem der Träger 1 zunächst so weit um die Längsachse der Rohrleitung gedreht wird, bis sein erster Querschnitt (Fig. 5) in der Biegeebene der Rohrleitung liegt (in Fig. 5 jeweils in der Zeichnungsebene), wonach der Träger 1 derart durch die Rohrbiegung hindurch geführt werden kann, dass die Unterseite 10 des ersten Querschnittes am Innenradius der Rohrbiegung vorbeigeführt wird, während die Oberseite 11 des ersten Querschnittes am Außenradius der Rohrbiegung vorbeigeführt wird. In den Fig. 4 bis 7 (sowie auch in Fig. 1) ist ferner eine Abdeckung 7 des Trägers 1 erkennbar, welche zur Montage des Werkzeugs 2 (Fig. 1 und 2) dient, wobei das Werkzeug 2 selbst durch eine Öffnung 8 (Fig. 4) in der Abdeckung 7 zwischen seiner Betriebsstellung (Fig. 2) und seiner Ruhestellung (Fig. 3) hin und her verlagert werden kann. Die oben beschriebene Geometrie des Trägers 1 bietet dem oder den Werkzeug(en) 2 hierbei andererseits einen maximal möglichen Bauraum, um in der Ruhestellung mehr oder minder gänzlich in dem Träger 1 aufgenommen sein zu können, so dass von dem Träger 1 während des Hindurchbewegens durch eine Rohrleitung keine Bauteile vorstehen, welche insbesondere in einer Rohrbiegung zu einer Blockierung führen könnten.

## Patentansprüche

1. Vorrichtung zur Inspektion und/oder Sanierung von Rohrleitungen, mit wenigstens einer Kamera und/oder mit wenigstens einem Werkzeug (2), welches an einem durch die Rohrleitung hindurch führbaren Träger (1) angeordnet ist, **dadurch gekennzeichnet, dass** ein erster Querschnitt des Trägers (1) in einer ersten Ebene, welche die Längsmittelachse der Rohrleitung einschließt, eine im Wesentlichen geradlinige oder konkave Unterseite (10) aufweist, von deren äußeren Enden (10a, 10b) sich zumindest die endseitigen Abschnitte (11a, 11b) einer Oberseite (11) bogenförmig konvex nach oben und von dem jeweiligen äußeren Ende (10a, 10b) der Unterseite (10) in Richtung deren entgegengesetztem Ende (10b, 10a) fort erstrecken, wobei der Krümmungsradius oder die Krümmungsradien der sich bogenförmig konvex nach oben und von den jeweiligen äußeren Enden (10a, 10b) der Unterseite (10) fort erstreckenden, endseitigen Abschnitte (11a, 11b) der Oberseite (11) des ersten Querschnittes mehr als 50% des maximalen Abstandes (A) der Unterseite (10) von der Oberseite (11) beträgt bzw. betragen.

2. Vorrichtung nach Anspruch 1, **dadurch gekennzeichnet, dass** der Krümmungsradius oder die Krümmungsradien der sich bogenförmig konvex nach oben und von den jeweiligen äußeren Enden (10a, 10b) der Unterseite (10) fort erstreckenden, endseitigen Abschnitte (11a, 11b) der Oberseite (11) des ersten Querschnittes wenigstens 60%, insbesondere wenigstens 70, vorzugsweise wenigstens 80%, des maximalen Abstandes (A) der Unterseite (10) von der Oberseite (11) beträgt bzw. betragen.

3. Vorrichtung nach Anspruch 1 oder 2, **dadurch gekennzeichnet, dass** zwischen den äußeren Enden (10a, 10b) der im Wesentlichen geradlinigen oder konkaven Unterseite (10) des ersten Querschnittes des Trägers (1) in der ersten Ebene, welche die Längsmittelachse der Rohrleitung einschließt, und den sich bogenförmig konvex nach oben und von dem jeweiligen äußeren Ende (10a, 10b) der Unterseite (10) fort erstreckenden endseitigen Abschnitten (11a, 11b) der Oberseite (11) ein konvexer Übergangsbereich (12a, 12b) mit einem kleineren Radius als der Radius oder die Radien der sich bogenförmig konvex nach oben und von dem jeweiligen äußeren Ende (10a, 10b) der Unterseite (10) fort erstreckenden endseitigen Abschnitte (11a, 11b) der Oberseite (11) angeordnet ist.

4. Vorrichtung nach einem der Ansprüche 1 bis 3, **dadurch gekennzeichnet, dass** die sich bogenförmig konvex nach oben und von dem jeweiligen äußeren Ende (10a, 10b) der Unterseite (10) fort erstreckenden endseitigen Abschnitte (11a, 11b) der Oberseite (11) des ersten Querschnittes des Trägers (1) in der ersten Ebene, welche die Längsmittelachse der Rohrleitung einschließt, im Wesentlichen kreisbogenförmig sind.

5. Vorrichtung nach einem der Ansprüche 1 bis 4, **dadurch gekennzeichnet, dass** zwischen den sich bogenförmig konvex nach oben und von dem jeweiligen äußeren Ende (10a, 10b) der Unterseite (10) fort erstreckenden endseitigen Abschnitten (11a, 11b) der Oberseite (11) des ersten Querschnittes des Trägers (1) in der ersten Ebene, welche die Längsmittelachse der Rohrleitung einschließt, ein zentraler Abschnitt (13) angeordnet ist, welcher sich im Wesentlichen geradlinig oder konkav etwa parallel zur Unterseite (10) des ersten Querschnittes erstreckt.

6. Vorrichtung nach einem der Ansprüche 1 bis 5, **dadurch gekennzeichnet, dass** ein zweiter Querschnitt des Trägers (1) in einer zweiten Ebene, welche senkrecht zur Längsmittelachse der Rohrleitung angeordnet ist, im Wesentlichen kreisförmig ist und gegebenenfalls
- an den zentralen Bereichen (14a, 14b) seiner beiden entgegengesetzten seitlichen Abschnitte; und/oder
- am zentralen Bereich (16) seiner Unterseite; und/oder
- am zentralen Bereich (15) seiner Oberseite geradlinig oder konvex mit einem größeren Krümmungsradius als der des kreisförmigen zweiten Querschnittes ausgebildet ist.

7. Vorrichtung nach einem der Ansprüche 1 bis 6, **dadurch gekennzeichnet, dass** der Träger (1) in Bezug auf
- den ersten Querschnitt des Trägers (1) in der ersten Ebene, welche die Längsmittelachse der Rohrleitung einschließt; und/oder
- den zweiten Querschnitt des Trägers (1) in der zwei ten Ebene, welche senkrecht zur Längsmittelachse der Rohrleitung angeordnet ist,
im Wesentlichen spiegelsymmetrisch ist.

8. Vorrichtung nach einem der Ansprüche 1 bis 7, **dadurch gekennzeichnet, dass** ein dritter Querschnitt des Trägers (1) in einer sowohl in Bezug auf die erste Ebene als auch in Bezug auf die zweite Ebene senkrecht angeordneten, dritten Ebene im Wesentlichen rechteckförmig ist, wobei die Ecken (17) dieses rechteckförmigen dritten Querschnittes, insbesondere kreisbogenförmig, abgerundet sind.

9. Vorrichtung nach einem der Ansprüche 1 bis 8, **dadurch gekennzeichnet, dass** der Träger (1) wenigstens ein Werkzeug (2) trägt, welches zwischen einer Ruhestellung, in welcher es innerhalb des Trägers (1) angeordnet ist, und einer Betriebsstellung, in welcher es von der Oberfläche des Trägers (1) vorragt, hin und her verlagerbar ist, wobei das Werkzeug (2) insbesondere ferner um eine in Bezug auf den ersten Querschnitt des Trägers (1) in der ersten Ebene, welche die Längsmittelachse der Rohrleitung einschließt, im Wesentlichen senkrechte Schwenkachse (S) schwenkbar ist.

10. Vorrichtung nach Anspruch 9, **dadurch gekennzeichnet, dass** das Werkzeug (2) an zumindest einem der sich bogenförmig konvex nach oben und von dem jeweiligen äußeren Ende (10a, 10b) der Unterseite (10) fort erstreckenden endseitigen Abschnitte (11a, 11b) der Oberseite (11) des ersten Querschnittes des Trägers (1) in der ersten Ebene, welche die Längsmittelachse der Rohrleitung einschließt, angeordnet ist.

11. Vorrichtung nach einem der Ansprüche 1 bis 10, **dadurch gekennzeichnet, dass** der Träger (1) eine Festsetzeinrichtung (6) aufweist, welche zum Festsetzen des Trägers (1) im Innern der Rohrleitung dient.

12. Vorrichtung nach einem der Ansprüche 1 bis 11, **dadurch gekennzeichnet, dass** der Träger (1) mit einem Schiebeaal (3) verbunden ist.

13. Vorrichtung nach Anspruch 12, **dadurch gekennzeichnet, dass** der Schiebeaal (3) um eine in Bezug auf die erste Ebene, welche die Längsmittelachse der Rohrleitung einschließt, senkrechte Achse (4) schwenkbar an dem Träger (1) befestigt ist, wobei die Schwenkachse (4) des Schiebeaals (3) insbesondere im Übergangsbereich eines der äußeren Enden (10a, 10b) der im Wesentlichen geradlinigen oder konkaven Unterseite (10) des ersten Querschnittes des Trägers (1) in der ersten Ebene, welche die Längsmittelachse der Rohrleitung einschließt, und dem sich an dieses Ende (10a, 10b) der Unterseite (10) anschließenden, sich bogenförmig konvex nach oben und von diesem Ende (10a, 10b) der Unterseite (10) fort erstreckenden endseitigen Abschnittes (11a, 11b) der Oberseite (11) angeordnet ist.

14. Vorrichtung nach einem der Ansprüche 1 bis 13, **dadurch gekennzeichnet, dass** dem Träger (1) eine zur Rotation desselben um die Längsmittelachse der Rohrleitung ausgebildete Dreheinrichtung (5) zugeordnet ist, welche insbesondere mittels des Schiebeaals (3) mit dem Träger (1) verbunden ist.

15. Vorrichtung nach Anspruch 14, **dadurch gekennzeichnet, dass** die Dreheinrichtung (5) ein erstes Teil (5a), welches mit dem Träger (1) verbunden ist, sowie ein in Bezug auf das erste Teil (5a) um die Längsmittelachse der Rohrleitung drehbares, zweites Teil (5b) aufweist, welches an der Innenwand der Rohrleitung festsetzbar ist.

16. Vorrichtung nach einem der Ansprüche 1 bis 15, **dadurch gekennzeichnet, dass** ein Antrieb eines Werkzeugs (2) des Trägers (1) und gegebenenfalls der Dreheinrichtung (5) außerhalb des Trägers (1) angeordnet ist, wobei der Antrieb des Werkzeugs (2) des Trägers (1) und gegebenenfalls der Dreheinrichtung (5) insbesondere in einer Antriebseinheit angeordnet ist, welche mittels in dem Schiebeaal (3) angeordneter Leitungen mit dem Werkzeug (2) des Trägers (1) und gegebenenfalls mit der Dreheinrichtung (5) verbunden ist.
